# EUROPÄISCHE PATENTANMELDUNG

(11) **EP 2 452 951 A1**
(43) Veröffentlichungstag der Anmeldung: **16.05.2012**
(21) Anmeldenummer: 10191342.4
(22) Anmeldetag: 16.11.2010
(51) Int. Cl.: C08C 19/44, C08L 15/00, C08F 2/38

(54) **Silanhaltige carbinolterminierte Polymere**

(71) Anmelder: LANXESS Deutschland GmbH, 51369 Leverkusen (DE)
(72) Erfinder: Steinhauser Norbert, Dr., 40789 Monheim (DE)

(57) **Zusammenfassung**

Die vorliegende Erfindung betrifft Endgruppen funktionalisierte Polymere, wobei diese am Kettenende eine silanhaltige Carbinolgruppe der Formel (I)

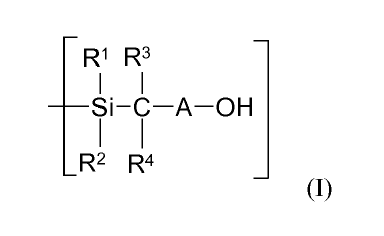

aufweisen, wobei
R¹, R², R³, R⁴
gleich oder verschieden sind und ein H, Alkyl-, Cycloalkyl-, Aryl-, Alkaryl- und Aralkylreste darstellen, die Heteroatome wie O, N, S, Si enthalten können,
A
für einen divalenten organischen Rest steht, der neben C und H Heteroatome wie O, N, S, Si enthalten kann.

## Beschreibung

Die Erfindung betrifft Endgruppen funktionalisierte Polymere, deren Herstellung und Verwendung.

Bei Reifenlaufflächen werden als wichtige Eigenschaften eine gute Haftung auf trockener und nasser Oberfläche sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen u. a. in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Die Einführung funktioneller Gruppen an den Polymerkettenenden ermöglicht eine physikalische oder chemische Anbindung dieser Kettenenden an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Endgruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Zu diesem Zweck sind zahlreiche Methoden zur Endgruppenmodifizierung entwickelt worden. Beispielsweise wird in der EP 0 180 141 A1 die Verwendung von 4,4'-Bis(dimethylamino)-benzophenon oder N-Methylcaprolactam als Funktionalisierungsreagenzien beschrieben. Auch die Verwendung von Ethylenoxid und N-Vinylyrrolidon ist aus EP 0 864 606 A1 bekannt. Eine Reihe weiterer möglicher Funktionalisierungsreagenzien sind in US 4,417,029 aufgeführt.

Insbesondere Silane mit in der Summe mindestens zwei Halogen- und/oder Alkyloxy- und/oder Aryloxysubstituenten an Silicium eignen sich gut zur Endgruppenfunktionalisierung von Dienkautschuken, da einer der genannten Substituenten am Si-Atom leicht durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US 3,244,664, US 4,185,042, EP 0 890 580 A1.

Viele der genannten Funktionalisierungsreagenzien weisen jedoch Nachteile auf, wie z.B. schlechte Löslichkeit im Prozesslösungsmittel, hohe Toxizität oder hohe Flüchtigkeit, was zur Kontamination des rückgeführten Lösungsmittels führen kann. Darüber hinaus können viele dieser Funktionalisierungsreagenzien mit mehr als einem anionischen Polymerkettenende reagieren, was zu oft störenden und schwer zu kontrollierenden Kopplungsreaktionen führt. Dies gilt v. a. für die genannten Silane. Diese haben außerdem den weiteren Nachteil, dass bei Reaktion dieser Silane mit dem anionischen Polymerkettenende Komponenten wie Halogenide oder Alkoxygruppen abgespalten werden, wobei letztere leicht zu Alkoholen umgesetzt werden. Halogenide begünstigen die Korrosion; Alkohole können zur Verunreinigung des Prozesslösungsmittels führen. Ein weiterer Nachteil bei der Verwendung von Silanen als Funktionalisierungsreagenzien besteht darin, dass die daraus erhaltenen Siloxan terminierten Polymere nach der Funktionalisierung über die Si-OR-Gruppen an den Polymerkettenenden (bzw. über die Si-OH-Gruppen nach Hydrolyse der Si-OR-Gruppen) unter Ausbildung von Si-O-Si-Bindungen koppeln können, was zu einem unerwünschten Viskositätsanstieg der Kautschuke während der Aufarbeitung und Lagerung führt. Es wurden viele Methoden zur Verringerung dieses Viskositätsanstiegs bei Siloxan terminierten Polymeren beschrieben, wie beispielsweise der Zusatz von stabilisierenden Reagenzien auf Basis von Säure und Säurehalogeniden (EP 0 801 078 A1), Zusatz von Siloxan (EP 1 198 506 B1), Zusatz von langkettigen Alkoholen (EP 1 237 934 B1) oder Zusatz von Reagenzien zur Kontrolle des pH-Wertes (EP 1 726 598).

EP 0 778 311 B1 beschreibt u. a. Cyclosiloxane als Funktionalisierungsreagenzien zur Einführung von Si-OH-Endgruppen. Diese Cyclosiloxane haben gegenüber den oben genannten Silanen den Vorteil, dass nur jeweils ein anionisches Polymerkettenende pro Cyclosiloxan-Molekül reagieren kann. Es finden also während der Funktionalisierungsreaktion keine Kopplungen durch Addition von mehr als einer Polymerkette pro Funktionalisierungsreagenz statt. Die nach Einführung des Funktionalisierungsreagenzes gebildeten Si-OH-Endgruppen können jedoch, wie oben erläutert und auch in US 4 618 650 beschrieben, unter Ausbildung von Si-O-Si-Bindungen koppeln. Auch hier besteht also das Problem des unerwünschten Viskositätsanstiegs während der Aufarbeitung und Lagerung.

Es bestand daher die Aufgabe, Endgruppen funktionalisierte Polymere bereitzustellen, die die Nachteile des Standes der Technik nicht aufweisen und es insbesondere ermöglichen, die gute Reaktivität von Silanen mit anionischen Polymerkettenenden zu nutzen, ohne deren Nachteile, wie etwa Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung, zu haben.

Zur Lösung dieser Aufgabe werden Endgruppen funktionalisierte Polymere vorgeschlagen, welche am Polymerkettenende eine silanhaltige Carbinolgruppe der Formel (I)

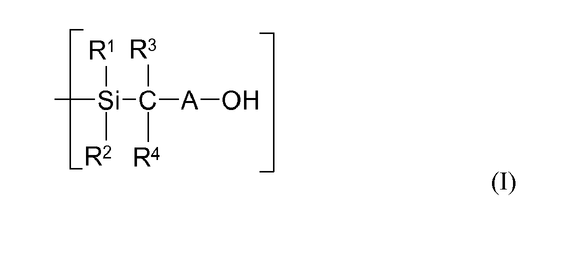

aufweisen, wobei
- R¹, R², R³, R⁴: gleich oder verschieden sind und ein H, Alkyl-, Cycloalkyl-, Aryl-, Alkaryl- und Aralkylreste darstellen, die Heteroatome wie O, N, S, Si enthalten können,
- A: für einen divalenten organischen Rest steht, der neben C und H Heteroatome wie O, N, S, Si enthalten kann.

Bevorzugt können die erfindungsgemäßen Endgruppen funktionalisierten Polymere als Metallsalze vorliegen mit Endgruppen der Formel (II):

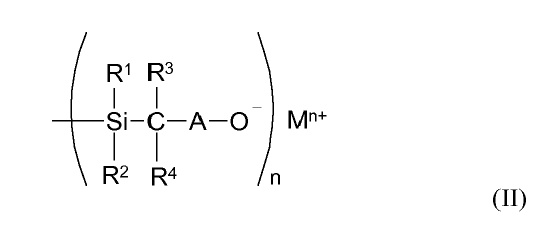

wobei
- R¹, R², R³, R⁴: gleich oder verschieden sind und für H, Alkyl-, Cycloalkyl-, Aryl-, Alkaryl- und Aralkylreste stehen, die Heteroatome wie O, N, S, Si enthalten können,
- A: für einen divalenten organischen Rest steht, der neben C und H Heteroatome wie O, N, S, Si enthalten kann,
- n: eine ganze Zahl von 1 bis 4 ist,
- M: ein Metall oder Halbmetall der Wertigkeit 1 bis 4 ist, vorzugsweise Li, Na, K, Mg, Ca, Fe, Co, Ni, Al, Nd, Ti, Si, Sn.

Bevorzugte Polymere zur Herstellung der erfindungsgemäßen Endgruppen funktionalisierten Polymere sind Dienpolymere und durch Copolymerisation von Dienen mit vinylaromatischen Monomeren erhältliche Dien-Copolymere.

Als Diene sind 1,3-Butadien, Isopren, 1,3-Pentadien, 2,3-Dimethylbutadien, 1-Phenyl-1,3-butadien und/oder 1,3-Hexadien bevorzugt. Besonders bevorzugt werden 1,3-Butadien und/oder Isopren eingesetzt.

Als vinylaromatische Comonomere können z. B. Styrol, o-, m- und/oder p-Methylstyrol, p-*tert-*Butylstyrol, α-Methylstyrol, Vinylnaphthalin, Divinylbenzol, Trivinylbenzol und/oder Divinylnaphthalin verwendet werden. Besonders bevorzugt wird Styrol eingesetzt.

Die Herstellung dieser Polymere erfolgt bevorzugt durch anionische Lösungspolymerisation oder durch Polymerisation mittels Koordinationskatalysatoren. Unter Koordinationskatalysatoren sind in diesem Zusammenhang Ziegler-Natta-Katalysatoren oder monometallische Katalysatorsysteme zu verstehen. Bevorzugte Koordinationskatalysatoren sind solche auf Basis Ni, Co, Ti, Zr, Nd, V, Cr, Mo, W oder Fe.

Initiatoren für die anionische Lösungspolymerisation sind solche auf Alkali- oder Erdalkalimetallbasis, wie z.B. Methyllithium, Ethyllithium, Isopropyllithium, *n*-Butyllithium, *sec-*Butyllithium, Pentyllithium, *n*-Hexyllithium, Cyclohexyllithium, Octyllithium, Decyllithium, 2-(6-Lithio-*n*-hexoxy)tetrahydropyran, 3-(*tert*-Butyldimethylsiloxy)-1-propyllithium, Phenyllithium, 4-Butylphenyllithium, 1-Naphthyllithium, p-Toluyllithium, Lithiumamide sekundärer Amine wie Lithiumpyrrolidid, Lithiumpiperidid, Lithiumhexamethylenimid, Lithiumdiphenylamid. Diese Lithiumamide können auch *in situ* durch Reaktion einer Organolithiumverbindung mit sekundären Aminen hergestellt werden. Des Weiteren können auch di- und polyfunktionelle Organolithiumverbindungen eingesetzt werden, wie z.B. 1,4-Dilithiobutan, Dilithiumpiperazid. Bevorzugt werden *n*-Butyllithium und *sec*-Butyllithium eingesetzt.

Zusätzlich können die bekannten Randomizer und Kontrollagenzien für die Mikrostruktur des Polymers verwendet werden, wie z.B. Diethylether, Di-*n*-propylether, Diisopropylether, Di-*n-*butylether, Ethylenglykoldimethylether, Ethylenglykoldiethylether, Ethylengykoldi-*n*-butylether, Ethylengykoldi-*tert*-butylether, Diethylenglykoldimethylether, Diethylenglykoldiethylether, Diethylenglykoldi-*n*-butylether, Diethylenglykoldi-*tert*-butylether, 2-(2-Ethoxyethoxy)-2-methyl-propan, Triethylenglykoldimethylether, Tetrahydrofuran, Ethyltetrahydrofurfurylether, Hexyltetrahydrofurfurylether, 2,2-Bis(2-tetrahydrofuryl)propan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan, 1,2-Dimorpholinoethan sowie Kalium- und Natriumsalze von Alkoholen, Phenolen, Carbonsäuren, Sulfonsäuren.

Derartige Lösungspolymerisationen sind bekannt und z.B. in I. Franta, Elastomers and Rubber Compounding Materials; Elsevier 1989, Seite 113 - 131, in Houben-Weyl, Methoden der Organischen Chemie, Thieme Verlag, Stuttgart, 1961, Band XIV/1 Seiten 645 bis 673 oder im Band E 20 (1987), Seiten 114 bis 134 und Seiten 134 bis 153 sowie in Comprehensive Polymer Science, Vol. 4, Part II (Pergamon Press Ltd., Oxford 1989), Seiten 53-108 beschrieben.

Die Herstellung der bevorzugten Dienhomo- und Diencopolymere findet vorzugsweise in einem Lösungsmittel statt. Als Lösungsmittel für die Polymerisation werden vorzugsweise inerte aprotische Lösungsmittel, wie z.B. paraffinische Kohlenwasserstoffe, wie isomere Butane, Pentane, Hexane, Heptane, Octane, Decane, Cyclopentan, Cyclohexan, Methylcyclohexan, Ethylcyclohexan oder 1,4-Dimethylcyclohexan oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan und n-Hexan. Ebenfalls möglich ist die Abmischung mit polaren Lösungsmitteln.

Die Menge an Lösungsmittel beträgt bei dem erfindungsgemäßen Verfahren üblicherweise 100 bis 1000 g, bevorzugt 200 bis 700 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisation kann in der Weise durchgeführt werden, dass zuerst die Monomere und das Lösungsmittel vorgelegt werden und dann die Polymerisation durch Zugabe des Initiators oder Katalysators gestartet wird. Es ist auch möglich in einem Zulaufverfahren zu polymerisieren, bei dem der Polymerisationsreaktor durch Zugabe von Monomeren und Lösungsmittel befüllt wird, wobei der Initiator oder Katalysator vorgelegt wird oder mit den Monomeren und dem Lösungsmittel zugegeben wird. Variationen, wie Vorlegen des Lösungsmittels im Reaktor, Zugabe des Initiators oder Katalysators und dann Zugabe der Monomere sind möglich. Weiterhin kann die Polymerisation in einer kontinuierlichen Fahrweise betrieben werden. Weitere Monomer- und Lösungsmittelzugabe während oder am Ende der Polymerisation ist in allen Fällen möglich.

Die Polymerisationszeit kann in breiten Bereichen von einigen Minuten bis zu einigen Stunden schwanken. Üblicherweise wird die Polymerisation innerhalb einer Zeitspanne von etwa 10 Minuten bis zu 8 Stunden, bevorzugt 20 Minuten bis 4 Stunden, durchgeführt. Sie kann sowohl bei Normaldruck als auch bei erhöhtem Druck (1 bis 10 bar) durchgeführt werden.

Es wurde überraschend festgestellt, dass durch die Verwendung von einem oder mehreren 1-Oxa-2-silacycloalkanen als Funktionalisierungsreagenzien Endgruppen funktionalisierte Polymere hergestellt werden können, welche die Nachteile des Standes der Technik nicht aufweisen. Beispielsweise können Kopplungen durch Mehrfachreaktionen am Funktionalisierungsreagenz, Abspaltung von störenden Komponenten sowie Kopplungen durch Ausbildung von Si-O-Si-Bindungen bei der Aufarbeitung und Lagerung nicht stattfinden.

Bei den 1-Oxa-2-silacycloalkanen handelt es sich um Verbindungen der allgemeinen Formel (III)

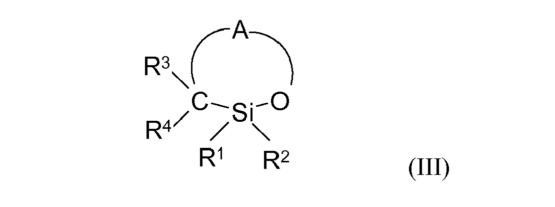

wobei
- R¹, R², R³, R⁴: gleich oder verschieden sind und für H, Alkyl-, Cycloalkyl-, Aryl-, Alkaryl- und Aralkylreste stehen, die Heteroatome wie O, N, S, Si enthalten können.
- A: für einen divalenten organischen Rest steht, der neben C und H Heteroatome wie O, N, S, Si enthalten kann.

Das Si-Atom der Formel (III) ist dabei monofunktionell, wobei unter monofunktionell zu verstehen ist, dass das Si-Atom drei Si-C-Bindungen und eine Si-O-Bindung aufweist.

Beispiele für Verbindungen der Formel (III) sind:
2,2-Dimethyl-1-oxa-2-silacyclohexan 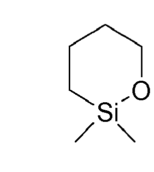
2,2-Diethyl-1-oxa-2-silacyclohexan 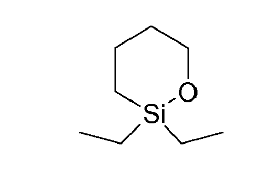
2,2-Dipropyl-1-oxa-2-silacyclohexan 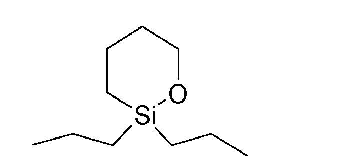
2-Methyl-2-phenyl-1-oxa-2-silacyclohexan 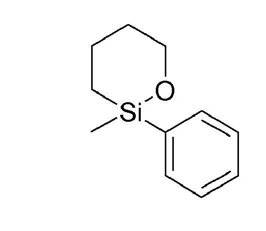
2,2-Diphenyl-1-oxa-2-silacyclohexan 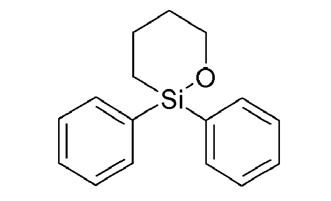
2,2,5,5-Tetramethyl-1-oxa-2-silacyclohexan 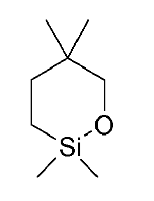
2,2,3-Trimethyl-1-oxa-2-silacyclohexan 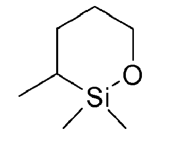
2,2-Dimethyl-1-oxa-2-silacyclopentan 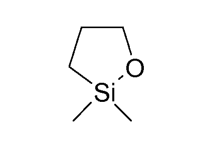
2,2,4-Trimethyl-1-oxa-2-silacyclopentan 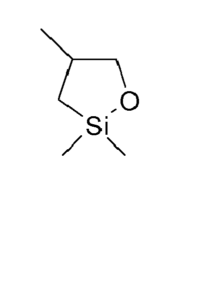
2,2-Dimethyl-1,4-dioxa-2-silacyclohexan 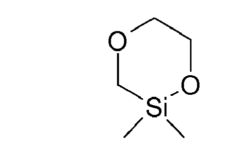
2,2,5,5-Tetramethyl-1,4-dioxa-2,5-disilacyclohexan 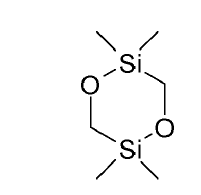
2,2,4-Trimethyl-1-oxa-4-aza-2-silacyclohexan 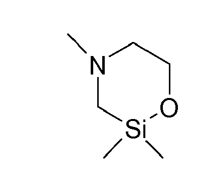
Benzo-2,2-dimethyl-1,4-dioxa-2-silacyclohexan 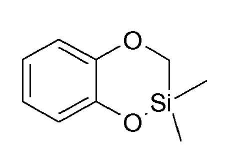
Benzo-2,2,4-trimethyl-1-oxa-4-aza-2-silacyclohexan

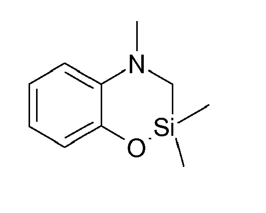

Es wurde festgestellt, dass die erfindungsgemäßen Endgruppen funktionalisierten Polymere durch Reaktion von reaktiven Polymerkettenenden mit 1-Oxa-2-silacycloalkanen und gegebenenfalls nachfolgender Protonierung der Alkoholat-Endgruppe zum Alkohol hergestellt werden können.

Somit ist auch die Verwendung von 1-Oxa-2-silacycloalkanen als Funktionalisierungsreagenzien zur Herstellung der erfindungsgemäßen Endgruppen funktionalisierten Polymere mit Endgruppen der Formel (I) oder (II) Gegenstand der Erfindung.

Die erfindungsgemäßen Endgruppen funktionalisierten Polymere weisen vorzugsweise mittlere Molgewichte (Zahlenmittel) von 10 000 bis 2 000 000 g/mol, bevorzugt 100 000 bis 1000 000 g/mol und Glasübergangstemperaturen von -110°C bis +20°C, bevorzugt -110°C bis 0°C, sowie Mooney-Viskositäten ML 1+4 (100°C) von 10 bis 200, vorzugsweise 30 bis 150 Mooney-Einheiten auf.

Ein weiterer Gegenstand der Erfindung ist ein Verfahren zur Herstellung der erfindungsgemäßen Endgruppen funktionalisierten Polymere, wonach eine oder mehrere Verbindungen der Formel (III), als Reinstoff, Lösung oder Suspension, zu Polymeren mit reaktiven Polymerkettenenden gegeben werden. Die Zugabe erfolgt bevorzugt nach Abschluss der Polymerisation; sie kann aber auch vor vollständigem Monomerumsatz erfolgen. Die Reaktion von Verbindungen der Formel (III) mit Polymeren mit reaktiven Polymerkettenenden erfolgt bei den üblicherweise für die Polymerisation verwendeten Temperaturen. Die Reaktionszeiten für die Umsetzung von Verbindungen nach Formel (III) mit den reaktiven Polymerkettenenden kann zwischen einigen Minuten bis mehreren Stunden liegen.

Die Menge dieser Verbindungen kann so gewählt werden, dass alle reaktiven Polymerkettenenden mit Verbindungen der Formel (III) reagieren, oder es kann ein Unterschuss dieser Verbindungen eingesetzt werden. Die eingesetzten Mengen der Verbindungen nach Formel (III) können einen weiten Bereich abdecken. Die bevorzugten Mengen liegen zwischen 0,005 - 2 Gew.-%, besonders bevorzugt zwischen 0,01 - 1 Gew.-%, bezogen auf die Menge an Polymer.

Zusätzlich zu Verbindungen nach Formel (III) können auch die für die anionische Dienpolymerisation typischen Kopplungsreagenzien zur Reaktion mit den reaktiven Polymerkettenenden eingesetzt werden. Beispiele für solche Kopplungsreagenzien sind Siliciumtetrachlorid, Methyltrichlorsilan, Dimethyldichlorsilan, Zinntetrachlorid, Dibutylzinndichlorid, Tetraalkoxysilane, Ethylenglykoldiglycidylether, 1,2,4-Tris(chlormethyl)benzol. Solche Kopplungsreagenzien können vor den Verbindungen der Formel (III) zugesetzt werden, zusammen mit diesen oder nach diesen.

Nach erfolgter Zugabe von Verbindungen der Formel (III) und gegebenenfalls von Kopplungsreagenzien werden vor oder während der Aufarbeitung der erfindungsgemäßen silanhaltigen carbinolterminierten Polymere bevorzugt die üblichen Alterungsschutzmittel, wie sterisch gehinderte Phenole, aromatische Amine, Phosphite, Thioether, zugesetzt. Weiterhin können die üblichen, für Dienkautschuke verwendeten Strecköle, wie DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle zugegeben werden. Auch die Zugabe von Füllstoffen, wie Ruß und Kieselsäure, Kautschuken und Kautschukhilfsmitteln ist möglich.

Die Entfernung des Lösungsmittels aus dem Polymerisationsprozess kann nach den üblichen Verfahren, wie Destillation, Strippen mit Wasserdampf oder Anlegen eines Vakuums, gegebenenfalls bei höherer Temperatur, erfolgen.

Ein weiterer Erfindungsgegenstand ist die Verwendung der erfindungsgemäßen Endgruppen funktionalisierten Polymere zur Herstellung von vulkanisierbaren Kautschukzusammensetzungen.

Vorzugsweise weisen diese vulkanisierbaren Kautschukzusammensetzungen weitere Kautschuke, Füllstoffe, Kautschukchemikalien, Verarbeitungshilfsmittel und Strecköle auf.

Zusätzliche Kautschuke sind beispielsweise Naturkautschuk sowie Synthesekautschuke. Sofern vorhanden liegt deren Menge üblicherweise im Bereich von 0,5 bis 95, bevorzugt 10 bis 80 Gew.-%, bezogen auf die gesamte Polymermenge in der Mischung. Die Menge an zusätzlich zugegebenen Kautschuken richtet sich wieder nach dem jeweiligen Verwendungszweck der erfindungsgemäßen Mischungen.

Exemplarisch sind hier literaturbekannte Synthesekautschuke aufgeführt. Sie umfassen u. a.

| | | |
|---|---|---|
| BR | - | Polybutadien |
| ABR | - | Butadien/Acrylsäure-C₁-C₄-Alkylester-Copolymere |
| IR | - | Polyisopren |
| E-SBR | - | Styrol-Butadien-Copolymerisate mit Styrolgehalten von 1-60, vorzugsweise 20-50 Gew.-%, hergestellt durch Emulsionspolymerisation |
| S-SBR | - | Styrol-Butadien-Copolymerisate mit Styrolgehalten von 1-60, vorzugsweise 15-45 Gew.-%, hergestellt durch Lösungspolymerisation |
| IIR | - | Isobutylen-Isopren-Copolymerisate |
| NBR | - | Butadien-Acrylnitril-Copolymere mit Acrylnitrilgehalten von 5-60, vorzugsweise 10-40 Gew.-% |
| HNBR | - | teilhydrierter oder vollständig hydrierter NBR-Kautschuk |
| EPDM | - | Ethylen-Propylen-Dien-Terpolymerisate |

sowie Mischungen dieser Kautschuke. Für die Herstellung von Kfz-Reifen sind insbesondere Naturkautschuk, E-SBR sowie S-SBR mit einer Glastemperatur oberhalb von -60°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukzusammensetzungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Fumace, Gasruß-, Thermal-, Acetylenruß- oder Lichtbogenverfahren hergestellte Ruße und besitzen BET-Oberflächen von 9 - 200 m²/g, z.B. SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTM N110-, N219-, N220-, N231-, N234-, N242-, N294-, N326-, N327-, N330-, N332-, N339-, N347-, N351-, N356-, N358-, N375-, N472-, N539-, N550-, N568-, N650-, N660-, N754-, N762-, N765-, N774-, N787- und N990-Ruße.
- Kautschukgele, insbesondere solche auf Basis von BR, E-SBR und/oder Polychloropren mit Teilchengrößen von 5 bis 1000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukzusammensetzungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01 :1 bis 50:1 bevorzugt 0,05:1 bis 20:1 liegt.

Die Füllstoffe werden hierbei in Mengen im Bereich von 10 bis 500 Gew.-Teile bezogen auf 100 Gew.-Teile Kautschuk eingesetzt. Bevorzugt werden 20 bis 200 Gew.-Teile eingesetzt.

In einer weiteren Ausführungsform der Erfindung enthalten die Kautschukzusammensetzungen noch Kautschukhilfsmittel, die beispielsweise die Verarbeitungseigenschaften der Kautschukzusammensetzungen verbessern, der Vernetzung der Kautschukzusammensetzungen dienen, die physikalischen Eigenschaften der aus den erfindungsgemäßen Kautschukzusammensetzungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind z.B. Vernetzeragentien, wie z.B. Schwefel oder Schwefel liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie z.B. DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren. Die gesamte Menge an Kautschukhilfsmitteln liegt im Bereich von 1 bis 300 Gewichtsteilen, bezogen auf 100 Gewichtsteile an Gesamtkautschuk. Bevorzugt werden 5 bis 150 Gewichtsteile an Kautschukhilfsmitteln eingesetzt.

Die Herstellung der vulkanisierbaren Kautschukzusammensetzungen kann in einem einstufigen oder in einem mehrstufigen Verfahren erfolgen, wobei 2 bis 3 Mischstufen bevorzugt sind. So kann z.B. die Zugabe von Schwefel und Beschleuniger in einer separaten Mischstufe z.B. auf einer Walze erfolgen, wobei Temperaturen im Bereich 30°C bis 90°C bevorzugt sind. Bevorzugt erfolgt die Zugabe von Schwefel und Beschleuniger in der letzen Mischstufe.

Für die Herstellung der vulkanisierbaren Kautschukzusammensetzungen geeignete Aggregate sind beispielsweise Walzen, Kneter, Innenmischer oder Mischextruder.

Somit sind vulkanisierbare Kautschukzusammensetzungen enthaltend Endgruppen funktionalisierte Polymere mit Endgruppen der Formel (I) oder (II) ein weiterer Gegenstand der Erfindung.

Ein weiterer Gegenstand der Erfindung ist die Verwendung der erfindungsgemäßen vulkanisierbaren Kautschukzusammensetzungen zur Herstellung von Kautschukvulkanisaten, insbesondere für die Herstellung von Reifen, insbesondere Reifenlaufflächen, die einen besonders geringen Rollwiderstand bei hoher Nassrutschfestigkeit und Abriebbeständigkeit aufweisen.

Die erfindungsgemäßen vulkanisierbaren Kautschukzusammensetzungen eignen sich auch zur Herstellung von Formkörpern, z.B. für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Beispiel 1a: Synthese von Styrol-Butadien-Copolymer (Vergleichsbeispiel)

Ein inertisierter 20L-Reaktor wurde mit 8,5 kg Hexan, 1125 g 1,3-Butadien, 375 g Styrol, 28 mmol 2,2-Bis(2-tetrahydrofuryl)propan sowie 10 mmol Butyllithium befüllt und der Inhalt auf 70°C erwärmt. Es wurde unter Rühren 1h bei 70°C polymerisiert. Anschließend wurde die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 51,5 Gew.%; Styrol-Gehalt (IR-spektroskopisch): 24,7 Gew.%, Glasübergangstemperatur (DSC): -16°C; zahlenmittleres Molekulargewicht Mₙ (GPC, PS-Standard): 242 kg/mol; M_{w}/Mₙ: 1,30; Mooney-Viskosität (ML1+4 bei 100°C): 71 ME

### Beispiel 1b: Synthese von silanhaltigem carbinolterminiertem Styrol-Butadien-Copolymer (erfindungs gemäß)

Ein inertisierter 20L-Reaktor wurde mit 8,5 kg Hexan, 1125 g 1,3-Butadien, 375 g Styrol, 28 mmol 2,2-Bis(2-tetrahydrofuryl)propan sowie 10 mmol Butyllithium befüllt und der Inhalt auf 70°C erwärmt. Es wurde unter Rühren 1h bei 70°C polymerisiert. Danach wurden 11 mmol (1,43 g) 2,2-Dimethyl-1-oxa-2-silacyclohexan zugegeben und der Reaktorinhalt weitere 20 min auf 70°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 51,2 Gew.%; Styrol-Gehalt (IR-spektroskopisch): 24,8 Gew.%, Glasübergangstemperatur (DSC): -15°C; zahlenmittleres Molekulargewicht Mₙ (GPC, PS-Standard): 261 kg/mol; M_{w}/Mₙ: 1,17; Mooney-Viskosität (ML1+4 bei 100°C): 73 ME

### Beispiel 1c: Synthese von silanhaltigem carbinolterminiertem Styrol-Butadien-Copolymer (erfindungs gemäß)

Ein inertisierter 20L-Reaktor wurde mit 8,5 kg Hexan, 1125 g 1,3-Butadien, 375 g Styrol, 28 mmol 2,2-Bis(2-tetrahydrofuryl)propan sowie 10,5 mmol Butyllithium befüllt und der Inhalt auf 70°C erwärmt. Es wurde unter Rühren 1h bei 70°C polymerisiert. Danach wurden 11,6 mmol (1,69 g) 2,2,4-Trimethyl-1-oxa-4-aza-2-silacyclohexan zugegeben und der Reaktorinhalt weitere 20 min auf 70°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 51,3 Gew.%; Styrol-Gehalt (IR-spektroskopisch): 25,4 Gew.%, Glasübergangstemperatur (DSC): -17°C; zahlenmittleres Molekulargewicht Mₙ (GPC, PS-Standard): 233 kg/mol; M_{w}/Mₙ: 1,18; Mooney-Viskosität (ML1+4 bei 100°C): 69 ME

### Beispiele 2 a-c: Kautschukzusammensetzungen

Es wurden Reifenlaufflächenkautschukzusammensetzungen hergestellt, die das Styrol-Butadien-Copolymer aus Beispiel 1a als Vergleichsbeispiel (Kautschukzusammensetzung 2a), sowie die erfindungsgemäßen silanhaltigen carbinolterminierten Styrol-Butadien-Copolymere aus Beispiel 1b und 1c (Kautschukzusammensetzungen 2b und 2c) enthalten. Die Bestandteile sind in Tabelle 1 aufgelistet. Die Kautschukzusammensetzungen (ohne Schwefel und Beschleuniger) wurden in einem 1,5-L Kneter hergestellt. Die Bestandteile Schwefel und Beschleuniger wurden anschließend auf einer Walze bei 40°C zugemischt.

**Tabelle 1: Bestandteile der Reifenlaufflächenkautschukzusammensetzungen (Angaben in phr: Gewichtsteile pro 100 Gewichtsteile Kautschuk)**

| | **Vergleichsbeispiel 2a** | **Erfindungsgemäßes Beispiel 2b** | **Erfindungsgemäßes Beispiel 2c** |
|---|---|---|---|
| Styrol-Butadien-Copolymer aus Beispiel 1a | 70 | 0 | 0 |
| Silanhaltiges carbinolterminiertes Styrol-Butadien-Copolymer aus Beispiel 1b | 0 | 70 | 0 |
| Silanhaltiges carbinolterminiertes Styrol-Butadien-Copolymer aus Beispiel 1c | 0 | 0 | 70 |
| hoch-cis-haltiges Polybutadien (BUNA^{™} CB 24 der Lanxess Deutschland | 30 | 30 | 30 |
| Kieselsäure (Ultrasil® 7000) | 90 | 90 | 90 |
| Ruß (Vulcan® J/N 375) | 7 | 7 | 7 |
| TDAE-Öl (Vivatec 500) | 36,3 | 36,3 | 36,3 |
| Verarbeitungshilfsmittel (Aflux 37) | 3 | 3 | 3 |
| Stearinsäure (Edenor C 18 98-100) | 1 | 1 | 1 |
| Alterungsschutzmittel (Vulkanox® 4020/LG der Lanxess Deutschland GmbH) | 2 | 2 | 2 |
| Alterungsschutzmittel (Vulkanox® HS/LG der Lanxess Deutschland GmbH) | 2 | 2 | 2 |
| Zinkoxid (Zinkweiß Rotsiegel) | 2 | 2 | 2 |
| Wachs (Antilux 654) | 2 | 2 | 2 |
| Silan (Si 69® von Evonik) | 7,2 | 7,2 | 7,2 |
| Diphenylguanidin (Vulkacit® D/C der Lanxess Deutschland GmbH) | 2,2 | 2,2 | 2,2 |
| Sulfenamid (Vulkacit® NZ/EGC der Lanxess Deutschland GmbH) | 1,6 | 1,6 | 1,6 |
| Schwefel (Mahlschwefel 90/95 Chancel) | 1,6 | 1,6 | 1,6 |
| Sulfonamid (Vulkalent® E/C) | 0,2 | 0,2 | 0,2 |

### Beispiele 3 a-c: Vulkanisateigenschaften

Die Reifenlaufflächenkautschukzusammenetzungen der Beispiele 2a-c nach Tabelle 1 wurden 20 Minuten bei 160°C vulkanisiert. Die Eigenschaften der entsprechenden Vulkanisate sind in Tabelle 2 als Beispiele 3a-c aufgeführt.

**Tabelle 2: Vulkanisateigenschaften**

| | **Vergleichsbeispiel 3a** | **Erfindungsgemäßes Beispiel 3b** | **Erfindungsgemäßes Beispiel 3c** |
|---|---|---|---|
| **Styrol-Butadien-Copolymer im Vulkanisat:** | | | |
| Styrol-Butadien-Copolymer aus Beispiel 1a | X | | |
| Silanhaltiges carbinolterminiertes Styrol-Butadien-Copolymer aus Beispiel 1b | | X | |
| Silanhaltiges carbinolterminiertes Styrol-Butadien-Copolymer aus Beispiel 1c | | | X |

| **Vulkanisateigenschaften:** | | | |
|---|---|---|---|
| Rückprallelastizität bei 23°C [%] | 28 | 29,5 | 30 |
| Rückprallelastizität bei 60°C [%] | 50,5 | 55,5 | 55,5 |
| tan δ-Maximum (MTS-Amplitudensweep bei 1 Hz, 60°C) | 0,193 | 0,177 | 0,178 |
| tan δ bei 0°C (dynamische Dämpfung bei 10Hz) | 0,291 | 0,324 | 0,326 |
| tan δ bei 60°C (dynamische Dämpfung bei 10 Hz) | 0,120 | 0,108 | 0,113 |
| Reißdehnung (S2-Probekörper) [%] | 428 | 428 | 428 |
| Reißspannung (S2-Probekörper) [MPa] | 18,3 | 19,5 | 19,3 |
| Abrieb (DIN 53516) [mm³] | 95 | 90 | 84 |

Für Reifenanwendungen wird ein niedriger Rollwiderstand benötigt, der dann gegeben ist, wenn im Vulkanisat ein hoher Wert für die Rückprallelastizität bei 60°C sowie ein niedriger tanδ-Werte in der dynamischen Dämpfung bei hoher Temperatur (60°C) und ein niedriges tan δ-Maximum im Amplitudensweep gemessen werden. Wie aus Tabelle 2 ersichtlich, zeichnen sich die Vulkanisate der erfindungsgemäßen Beispiele 3b und 3c durch eine hohe Rückprallelastizität bei 60°C, einen niedrigen tanδ-Werte in der dynamischen Dämpfung bei 60°C sowie ein niedriges tan δ-Maximum im Amplitudensweep aus.

Für Reifenanwendungen wird zudem eine hohe Nassrutschfestigkeit benötigt, die dann gegeben ist, wenn das Vulkanisat einen hohen tanδ-Werte in der dynamischen Dämpfung bei tiefer Temperatur (0°C) aufweist. Wie aus Tabelle 2 ersichtlich, zeichnen sich die Vulkanisate der erfindungsgemäßen Beispiele 3b und 3c durch einen hohen tanδ-Werte in der dynamischen Dämpfung bei 0°C aus.

Des Weiteren ist für Reifenanwendungen eine hohe Abriebfestigkeit notwendig. Wie aus Tabelle 2 ersichtlich, zeichnen sich die Vulkanisate der erfindungsgemäßen Beispiele 3b und 3c durch einen geringen DIN-Abrieb aus.

## Patentansprüche

1. Endgruppen funktionalisierte Polymere, **dadurch gekennzeichnet, dass** die Polymere am
Kettenende eine silanhaltige Carbinolgruppe der Formel (I) 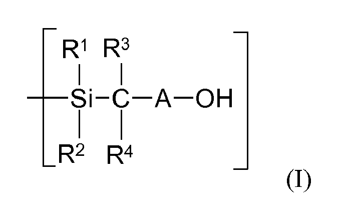 aufweisen, wobei
R¹, R², R³, R⁴ gleich oder verschieden sind und ein H, Alkyl-, Cycloalkyl-, Aryl-, Alkaryl- und Aralkylreste darstellen, die Heteroatome wie O, N, S, Si enthalten können,
A für einen divalenten organischen Rest steht, der neben C und H Heteroatome wie O, N, S, Si enthalten kann.

2. Endgruppen funktionalisierte Polymere nach Anspruch 1, **dadurch gekennzeichnet, dass**
die Endgruppen der Polymere als Metallsalze der Formel (II) 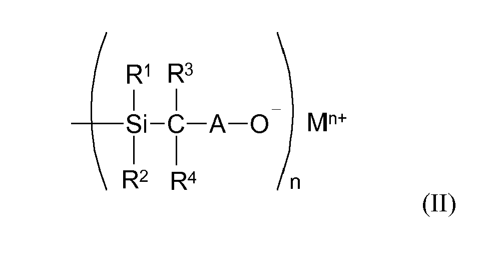 vorliegen, wobei
R¹, R², R³, R⁴ gleich oder verschieden sind und ein H, Alkyl-, Cycloalkyl-, Aryl-, Alkaryl- und Aralkylreste darstellen, die Heteroatome wie O, N, S, Si enthalten können,
A für einen divalenten organischen Rest steht, der neben C und H Heteroatome wie O, N, S, Si enthalten kann,
n eine ganze Zahl von 1 bis 4 ist,
M ein Metall oder Halbmetall der Wertigkeit 1 bis 4 ist, vorzugsweise Li, Na, K, Mg, Ca, Fe, Co, Ni, Al, Nd, Ti, Si, Sn.

3. Endgruppen funktionalisierte Polymere nach Anspruch 1 oder 2, **dadurch gekennzeichnet, dass** es sich bei den Polymeren um Dienpolymere oder durch Copolymerisation von Dienen mit vinylaromatischen Monomeren erhältliche Dien-Copolymere handelt.

4. Endgruppen funktionalisierte Polymere nach Anspruch 3, **dadurch gekennzeichnet, dass** das Dienpolymer ein Polybutadien, ein Polyisopren, ein Butadien-Isopren-Copolymer, ein Butadien-Styrol-Copolymer, ein Isopren-Styrol-Copolymer oder ein Butadien-Isopren-Styrol-Terpolymer ist.

5. Endgruppen funktionalisierte Polymere nach Anspruch 4, **dadurch gekennzeichnet, dass** als Funktionalisierungsreagenz ein oder mehrere 1-Oxa-2-silacycloalkane eingesetzt werden.

6. Endgruppen funktionalisierte Polymere nach Anspruch 5, **dadurch gekennzeichnet, dass** es
sich bei den 1-Oxa-2-silacycloalkanen um Verbindungen der allgemeinen Formel (III) 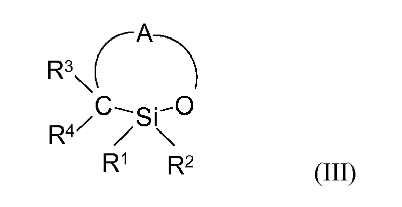 handelt, wobei
R¹, R²,R³, R⁴ gleich oder verschieden sind und für H, Alkyl-, Cycloalkyl-, Aryl-, Alkaryl- und Aralkylreste stehen, die Heteroatome wie O, N, S, Si enthalten können.
A für einen divalenten organischen Rest steht, der neben C und H Heteroatome wie O, N, S, Si enthalten kann.

7. Endgruppen funktionalisierte Polymere nach Anspruch 6, **dadurch gekennzeichnet, dass** die Polymere mittlere Molgewichte (Zahlenmittel) von 10000 bis 2000000 g/mol, bevorzugt 100 000 bis 1000 000 g/mol aufweisen.

8. Endgruppen funktionalisierte Polymere nach Anspruch 7, **dadurch gekennzeichnet, dass** die Polymere Glasübergangstemperaturen von -110°C bis +20°C, bevorzugt -110°C bis 0°C aufweisen.

9. Endgruppen funktionalisierte Polymere nach Anspruch 8, **dadurch gekennzeichnet, dass** die Polymere Mooney-Viskositäten [ML 1+4 (100°C)] von 10 bis 200, vorzugsweise 30 bis 150 Mooney-Einheiten aufweisen.

10. Verwendung von 1-Oxa-2-silacycloalkanen als Funktionalisierungsreagenzien zur Herstellung von Endgruppen funktionalisierten Polymeren nach Anspruch 1 oder 2.

11. Verfahren zur Herstellung von Endgruppen funktionalisierten Polymeren, **dadurch gekennzeichnet, dass** ein oder mehrere 1-Oxa-2-silacycloalkane (Funktionalisierungsreagenzien) zu Polymeren mit reaktiven Polymerkettenenden zugegeben werden.

12. Verfahren nach Anspruch 11, **dadurch gekennzeichnet, dass** die Zugabe der Funktionalisierungsreagenzien nach Abschluss der Polymerisation erfolgt.

13. Verfahren nach Anspruch 11, **dadurch gekennzeichnet, dass** ein Überschuss an Funktionalisierungsreagenzien eingesetzt wird.

14. Verfahren nach Anspruch 11, **dadurch gekennzeichnet, dass** stöchiometrische Mengen oder ein Unterschuss an Funktionalisierungsreagenzien eingesetzt wird.

15. Verfahren nach einem der Ansprüche 13 und 14, **dadurch gekennzeichnet, dass** die Menge an Funktionalisierungsreagenzien zwischen 0,005 - 2 Gew.-%, bevorzugt zwischen 0,01 - 1 Gew.-%, bezogen auf die Menge an Polymer mit reaktiven Polymerkettenenden, liegt.

16. Verfahren nach einem der vorgenannten Ansprüche, **dadurch gekennzeichnet, dass** Kopplungsreagenzien zur Umsetzung mit den reaktiven Polymerkettenenden eingesetzt werden.

17. Verwendung von Endgruppen funktionalisierten Polymeren nach einem der vorgenannten Ansprüche zur Herstellung von vulkanisierbaren Kautschukzusammensetzungen.

18. Vulkanisierbare Kautschukzusammensetzungen nach Anspruch 17, **dadurch gekennzeichnet, dass** sie Alterungsschutzmittel, Öle, Füllstoffe, Kautschuke und/oder Kautschukhilfsmittel aufweisen.

19. Vulkanisierbare Kautschukzusammensetzungen enthaltend Endgruppen funktionalisierte Polymere mit Endgruppen der Formel (I) oder (II).

20. Verwendung der vulkanisierbaren Kautschukzusammensetzungen nach Anspruch 19 zur Herstellung von Reifen, insbesondere Reifenlaufflächen.

21. Verwendung der vulkanisierbaren Kautschukzusammensetzungen nach Anspruch 19 zur Herstellung von Formkörpern, insbesondere Kabelmänteln, Schläuchen, Treibriemen, Förderbändern, Walzenbelägen, Schuhsohlen, Dichtungsringen und Dämpfungselementen.

22. Reifen erhältlich nach Anspruch 20.

23. Formkörper erhältlich nach Anspruch 21.
